# EUROPÄISCHE PATENTSCHRIFT

(11) **EP 3 746 326 B1**
(45) Veröffentlichungstag und Bekanntmachung des Hinweises auf die Patenterteilung: **22.04.2026**
(21) Anmeldenummer: 18829209.8
(22) Anmeldetag: 05.12.2018
(51) Int. Cl.: B60K 15/03, B62J 35/00, B29C 45/14

(54) **KRAFTSTOFFTANK FÜR EIN MOTORRAD**
FUEL TANK FOR A MOTORCYCLE
RÉSERVOIR DE CARBURANT POUR UNE MOTO

(30) Priorität: 29.01.2018 DE 102018201272
(43) Veröffentlichungstag der Anmeldung: 09.12.2020
(73) Patentinhaber: Bayerische Motoren Werke Aktiengesellschaft, 80809 München (DE)
(72) Erfinder: SCHNEPPENHEIM, Joerg, 82110 Germering (DE); ERHARD, Daniel, 82256 Fürstenfeldbruck (DE)
(86) Internationale Anmeldenummer: PCT/EP2018/083568
(87) Internationale Veröffentlichungsnummer: WO 2019/145076

(56) Entgegenhaltungen:
- WO-A1-02/09924
- DE-A1- 102005 060 246
- DE-A1- 102006 056 430
- DE-A1- 102008 009 438
- DE-A1- 102017 222 256
- DE-A1- 19 725 560
- DE-A1- 2 233 839
- DE-U1- 202008 012 978
- JP-A- H10 181 655
- JP-A- H10 181 658
- US-A- 3 934 747
- US-A- 5 567 296
- US-A- 5 884 380
- US-A1- 2004 009 315
- US-A1- 2011 233 225
- US-A1- 2016 039 282
- US-A1- 2017 217 075
- US-A1- 2017 341 699
- US-B1- 7 857 928

## Beschreibung

Die Erfindung betrifft einen Kraftstofftank (10) für ein Motorrad.

Es ist üblich, dass Behälter für Kraftfahrzeuge, die zumindest eine Fläche haben, welche nach außen hin sichtbar ist, wenigstens im Sichtbereich lackiert werden. Bei einem solchen Behälter kann es sich zum Beispiel um einen Kraftstofftank für ein Motorrad handeln.

Um ein hochwertiges Erscheinungsbild zu erreichen, werden solche Behälter aus einem gut lackierbaren Material gefertigt, zum Beispiel aus einem Metall. Derartige Behälter sind allerdings teuer und weisen ein hohes Gewicht auf

JP H10 181658 A offenbart einen Kraftstofftank für Motorräder nach dem Stand der Technik.

Die US 2017/0217075 A1 beschreibt einen Kunststofftank, an dem ein Hitzeschutz verschweißt oder verklebt ist. Der Hitzeschutz kann eine reflektierende Schicht aus Aluminium aufweisen.

Die US2004/0009315 A1 offenbart einen Kunststofftank, der mit einer zusätzlichen Kunststoffschicht beschichtet ist.

Die US 3,934,747 beschreibt einen Kunststoffbehälter, der aus mehreren Segmenten zusammengesetzt ist und der lackiert sein kann.

Die WO 02/09924 A1 offenbart eine Barrierefolie, die mit einem polymeren Werkstoff hinterspritzt ist. Die Barrierefolie kann eine metallische Schicht enthalten.

Die DE 10 2006 056 430 A1 beschreibt einen mehrteiligen Tank mit zwei Endstücken und einem Mittelstück.

Die US 2016/0039282 A1 betrifft einen Kraftstofftank aus einem Kompositmaterial, welcher mit Bändern, welche Fasermaterial aufweisen, an einem Unterboden eines Fahrzeugs befestigt ist. Es ist daher eine Aufgabe der vorliegenden Erfindung, einen Behälter für ein Kraftfahrzeug bereitzustellen, der ein geringes Gewicht aufweist, kostengünstig herstellbar ist und gleichzeitig eine gut lackierbare Oberfläche aufweist.

Diese Aufgabe wird erfindungsgemäß gelöst durch die Merkmale des Anspruchs 1.

Ein derartiger Behälter hat den Vorteil, dass durch die Verwendung von Kunststoffsegmenten ein geringes Gesamtgewicht erreicht werden kann und die Herstellkosten insgesamt niedrig sind. Es ist möglich, nur die Kunststoffsegmente, die in einem Sichtbereich liegen, mit einer lackierbaren Deckschicht zu versehen oder aus einem lackierbaren Material zu fertigen. Somit entsteht für einen Kunden ein optisch hochwertiges Erscheinungsbild. Insbesondere können spezifische Vorteile der Deckschicht genutzt werden.

Durch die Unterteilung des Kunststoffbehälters in einzelne Kunststoffsegmente ist es außerdem möglich, einzelne Bereiche des Kunststoffbehälters auf einfache Weise zu lackieren. Zum Beispiel können die einzelnen Kunststoffsegmente vor dem Verschweißen lackiert werden. Dadurch kann auf ein Abkleben einzelner Bereiche beim Lackieren verzichtet werden.

Es ist besonders vorteilhaft, wenn die Kunststoffsegmente derart ausgebildet sind, dass in einem montierten Zustand des Kunststoffbehälters zumindest ein Kunststoffsegment nahezu vollständig in einem Sichtbereich liegt, während zumindest ein weiteres Kunststoffsegment vollständig verdeckt ist. Auf diese Weise ist es möglich, die sichtbaren Bereiche mit einer besonders hochwertigen Oberfläche zu versehen, während die Kunststoffsegmente im verdeckten Bereich frei von einer Lackierung oder einer Deckschicht bleiben und somit besonders kostengünstig sein können.

Die Verwendung eines lösbaren Verbindungsmittels, beispielsweise einer Schraube, hat den Vorteil, dass bei einer Beschädigung der Deckschicht diese einfach und kostengünstig getauscht werden kann.

Gemäß einer Ausführungsform kann die lackierbare Deckschicht ein Metallblech sein. Auf metallischen Werkstoffen haften Lacke in der Regel besonders gut. Zudem ist es möglich, Metallbleche mit einem individuellen Design zu versehen. Zum Beispiel kann das Metallblech mit einer individuellen Gravierung oder Lackierung versehen werden. Ein Kunde kann seinen Namen gravieren oder ein Familienwappen oder Vereinslogo auf das Metallblech lackieren lassen. Eine solche Individualisierung kann sehr einfach durch eine nachträgliche Montage des Metallblechs bei einem Händler erfolgen. Außerdem kann durch ein Metallblech die Stabilität eines Kunststoffsegments verbessert werden. Es können somit die wirtschaftlichen Vorteile von Kunststoff mit den optischen und strukturellen Vorteilen von Metall kombiniert werden.

Das Metallblech weist vorzugsweise eine geringe Wandstärke auf. Dies ist möglich, da die Metallblende selbst keine Behälterfunktion übernehmen muss. Aus demselben Grund kann bei der Herstellung der Metallblende ein hoher Verstreckungsgrad realisiert werden, um hochwertige Designformen umzusetzen.

Beispielsweise besteht die lackierbare Deckschicht aus Aluminium oder Titan. Diese Materialien werden als besonders hochwertig empfunden und können auch zumindest teilweise frei von einer Lackierung bleiben. In einer besonders kostengünstigen Ausführungsform kann die lackierbare Deckschicht aus Stahlblech gebildet sein.

Gemäß einer weiteren Ausführungsform kann die lackierbare Deckschicht Kunststoff aufweisen oder aus Kunststoff bestehen. Beispielsweise ist die lackierbare Deckschicht ein Kunststoffformteil. Das Kunststoffsegment kann in diesem Fall aus einem Grundkörper und einer Deckschicht bestehen, wobei der Grundkörper eine erste Kunststoffkomponente aufweist und die Deckschicht eine zweite Kunststoffkomponente aufweist, welche sich in ihrer Zusammensetzung von der ersten Kunststoffkomponente unterscheidet. Ein Behälter mit einer Deckschicht aus Kunststoff kann im Vergleich zu einem Behälter mit metallischen Komponenten ein besonders geringes Gewicht haben. Da in Kunststoffformteilen auf einfache Weise Versteifungen integriert werden können, kann so eine besonders hohe Stabilität der einzelnen Kunststoffsegmente und folglich eine hohe Stabilität des gesamten Behälters erzielt werden.

Um die Deckschicht besonders einfach an einem Kunststoffelement montieren zu können, kann die Deckschicht mindestens ein Montageelement aufweisen. Beispielsweise umfasst das Montageelement einen Haken. Das Montageelement kann zum Einhängen oder Einrasten der Deckschicht an einem Kunststoffsegment dienen. Das Montageelement dient insbesondere dazu, die Deckschicht vorzumontieren, beispielsweise indem die Deckschicht mittels des Montageelement an einem Kunststoffsegment eingehängt wird, bevor die Deckschicht mittels eines Verbindungsmittels fest mit dem Kunststoffsegment verbunden wird. Durch das mindestens eine Montageelement kann folglich die Montage der Deckschicht vereinfacht werden und die Anzahl der benötigten Verbindungsmittel reduziert werden.

Jedes der Kunststoffsegmente kann mindestens einen zumindest abschnittsweise umlaufenden Schweißflansch aufweisen. Die Schweißflansche dienen zur Verbindung der Kunststoffsegmente mittels Kunststoffschweißens.

Der Kunststoffbehälter kann mindestens drei Kunststoffsegmente aufweisen, wobei mindestens ein Kunststoffsegment als zweiseitig offenes Mittelteil und mindestens zwei weitere Kunststoffsegmente als einseitig offene Deckel ausgebildet und die Deckel beidseitig am Mittelteil angeordnet sind. Dies hat den Vorteil, dass auch komplexe Geometrien des Kunststoffbehälters umgesetzt werden können, ohne dass komplexe Werkzeuge notwendig sind.

Der Kunststoffbehälter ist ein Kraftstofftank für ein Motorrad. Bei Motorrädern ist der Tank üblicherweise in einem Bereich zwischen Lenker und Sitzfläche angeordnet und weist eine nach außen hin sichtbare, lackierte Fläche auf. Durch die Erfindung können die Vorteile von Kunststoff mit den optischen Eigenschaften von metallischen oder anderen Werkstoffen kombiniert werden.

Vorzugsweise ist der Kunststoffbehälter zumindest bereichsweise durch eine Blende abgedeckt. Die Blende kann eine schützende Funktion haben. Beispielsweise ist die Blende aus Metall gefertigt und ebenfalls lackiert. Im Falle eines Kraftstofftanks, beispielsweise eines Kraftstofftanks für ein Motorrad, kann die Blende den Tank vor Beschädigungen bei einem Aufprall auf dem Boden schützen. Insbesondere durch Steine oder andere spitze Gegenstände besteht die Gefahr, dass der Kunststoffbehälter beschädigt wird. Durch die Verwendung einer Blende kann der Kunststoffbehälter nur eine geringe Wandstärke aufweisen und trotzdem vor Beschädigung geschützt sein. Außerdem können bei einer Instandsetzung die Reparaturkosten geringgehalten werden, da nur die Blende und nicht der komplette Kunststoffbehälter getauscht werden muss.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 schematisch einen Teilschnitt eines beispielhaften Kunststoffbehälters,
- Figur 2 schematisch ein Kunststoffsegment für einen erfindungsgemäßen Kunststoffbehälter und
- die Figuren 3a bis 3c schematisch verschiedene Verfahrensschritte eines möglichen Verfahrens zur Herstellung eines beispielhaften Kunststoffbehälters.

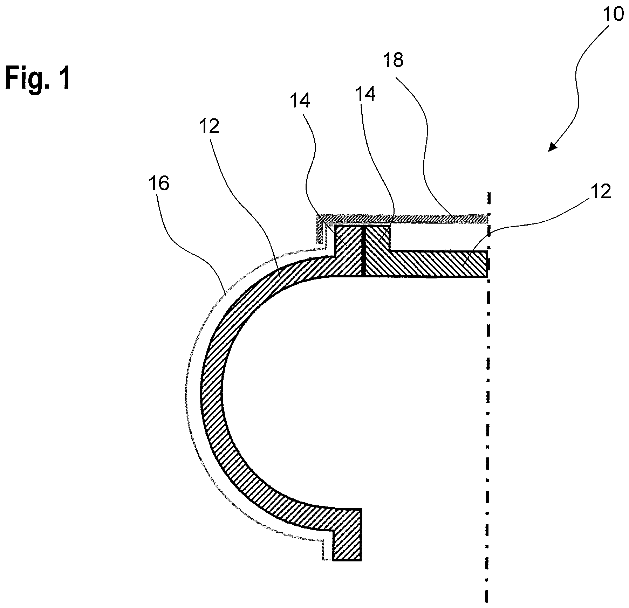

Figur 1 zeigt einen Teilschnitt durch einen modularen Kunststoffbehälter 10, der mindestens zwei Kunststoffsegmente 12 aufweist. Der Kunststoffbehälter 10 ist ein Kraftstofftank.

Die Kunststoffsegmente sind beispielsweise kostengünstig als Spritzgussteile ausgebildet. Um die Kunststoffsegmente 12 miteinander zu verbinden, sind diese beispielsweise entlang zumindest abschnittsweise umlaufender Schweißflansche 14 miteinander verschweißt durch Kunststoffschweißen.

An einem der beiden Kunststoffsegmente 12 ist eine lackierbare Deckschicht 16 angeordnet. Die lackierbare Deckschicht 16 kann ein Metallblech, eine Metallfolie, ein Kunststoffformteil, eine Kunststofffolie oder ähnliches sein. Dadurch ist es möglich, den Kunststoffbehälter 10 kostengünstig zu fertigen und mit einer hochwertigen Oberfläche zu versehen. Dabei muss die lackierbare Deckschicht 16 nicht zwangsweise vollständig lackiert sein. Es ist auch möglich, nur einen Teil der Deckschicht 16 zu lackieren. Zum Beispiel kann die Deckschicht 16 ein besonders hochwertiges Material wie Aluminium oder Titan aufweisen. Des Weiteren ist es möglich, die Deckschicht 16 kundenindividuell zu gravieren.

In der gezeigten Ausführungsform ist die lackierbare Deckschicht hinterspritzt und sind das Kunststoffsegment 12 und die lackierbare Deckschicht 16 miteinander verbunden.

Zusätzlich zu der lackierbaren Deckschicht 16 ist an dem Kunststoffbehälter 10 eine Blende 18 angeordnet. Die Blende 18 kann ebenfalls lackiert sein, allerdings hat sie hauptsächlich eine Schutzfunktion. Insbesondere kann die Blende 18 eine hohe Festigkeit aufweisen. Dadurch können die unter der Blende 18 liegenden Kunststoffsegmente 12 des Kunststoffbehälters 10 eine geringe Dicke aufweisen und somit materialsparend, kostengünstig und leicht ausgebildet sein. Im Bedarfsfall, zum Beispiel bei einem Aufprall des Kunststoffbehälters 10, schützt die Blende 18 die darunterliegenden Kunststoffsegmente 12 vor Beschädigung. Gleichzeitig vereinfacht die Blende 18 die Instandsetzung, da die Blende 18 leicht ausgetauscht werden kann.

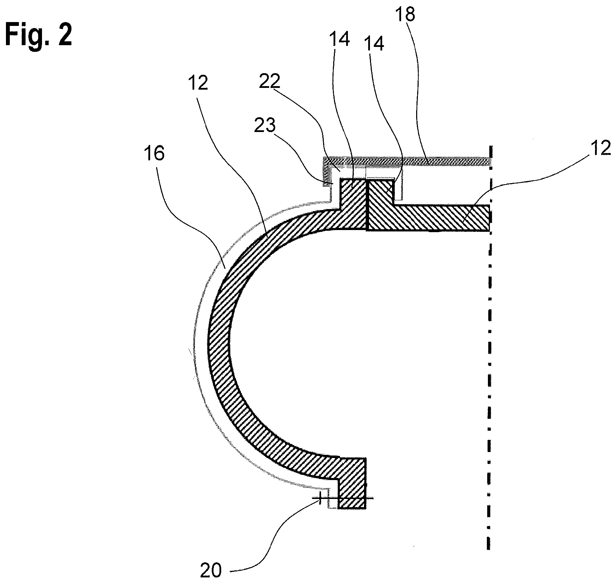

Figur 2 zeigt ein Kunststoffsegment 12 für einen Kunststoffbehälter 10, bei dem im Unterschied zu der in Figur 1 gezeigten Ausführungsform die lackierbare Deckschicht 16 nicht hinterspritzt ist, sondern die Deckschicht 16 mittels eines Verbindungsmittels 20 an dem Kunststoffsegment 12 befestigt ist. Das Verbindungsmittel ist in Figur 2 nur schematisch dargestellt. Es kann sich dabei um eine Schraube oder ähnliches handeln.

Um die Montage der lackierbaren Deckschicht 16 an dem Kunststoffsegment 12 zu vereinfachen, weist die lackierbare Deckschicht 16 ein Montageelement 22, insbesondere einen Haken 23 auf. Die lackierbare Deckschicht 16 kann mittels des Hakens23 an dem Kunststoffsegment 12 vormontiert, insbesondere eingehängt, werden. Somit kann das Verbindungsmittel 20 auf einfache Weise angebracht werden, ohne dass die Deckschicht 16 während der Montage von einem Monteur in ihrer Position gehalten werden muss.

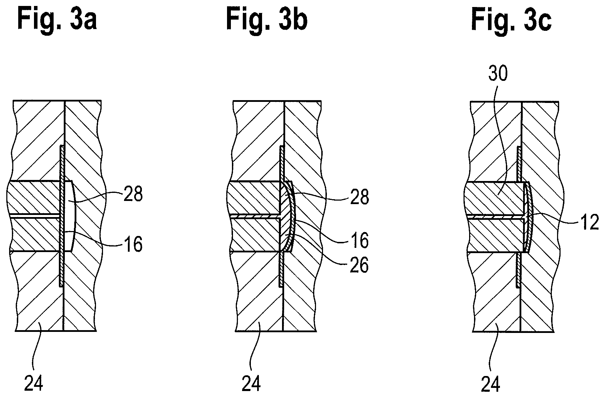

Die Figuren 3a bis 3c zeigen schematisch verschiedene Verfahrensschritte eines möglichen Verfahrens zur Herstellung eines beispielhaften Kunststoffbehälters 10, insbesondere die Herstellung eines Kunststoffsegments 12. Der Vorteil des beschriebenen Verfahrens liegt in der Kombination mehrerer Arbeitsschritte. Es ist aber auch möglich, das Kunststoffsegment 12 konventionell sequentiell herzustellen.

In einem ersten Schritt, gezeigt in Figur 3a, wird das Material für eine lackierbare Deckschicht 16 in eine zweiteilige Werkzeugform 24 eingelegt.

Anschließend wird, wie in Figur 3b gezeigt, die lackierbare Deckschicht 16 durch eine Kunststoffschmelze 26, die mit hohem Druck in eine Kavität 28 eingespritzt wird, in die Kavität 28 gedrückt und dadurch verformt. Alternativ kann die lackierbare Deckschicht bereits vor dem Einlegen in die Werkzeugform 24 oder vor dem Einspritzen der Schmelze 26 verformt werden, zum Beispiel durch Tiefziehen.

In einem weiteren Verfahrensschritt, der in Figur 3c gezeigt ist, wird die Kunststoffschmelze 26 durch einen Prägestempel 30 komprimiert. Anschließend kann das Kunststoffsegment 12 aus der Werkzeugform 24 entnommen werden. Eventuell überstehendes Material kann durch Stanzen entfernt werden.

## Patentansprüche

1. Kraftstofftank (10) für ein Motorrad, umfassend mindestens drei Kunststoffsegmente (12), die mittels Kunststoffschweißens miteinander verbunden sind, wobei mindestens eines der Kunststoffsegmente (12) an seiner Außenseite eine lackierbare Deckschicht (16) aufweist, wobei die Deckschicht (16) mittels mindestens eines Verbindungsmittels lösbar an einem Kunststoffsegment (12) montiert ist, und wobei mindestens ein Kunststoffsegment (12) als zweiseitig offenes Mittelteil und mindestens zwei weitere Kunststoffsegmente als einseitig offene Deckel ausgebildet und die Deckel beidseitig am Mittelteil angeordnet sind.

2. Kraftstofftank (10) nach Anspruch 1, **dadurch gekennzeichnet, dass** die lackierbare Deckschicht (16) ein Metallblech ist.

3. Kraftstofftank nach Anspruch 1, **dadurch gekennzeichnet, dass** die lackierbare Deckschicht (16) Kunststoff aufweist oder aus Kunststoff besteht.

4. Kraftstofftank (10) nach einem der vorhergehenden Ansprüche, **dadurch gekennzeichnet, dass** die Deckschicht (16) mindestens ein Montageelement (22) aufweist.

5. Kraftstofftank (10) nach einem der vorhergehenden Ansprüche, **dadurch gekennzeichnet, dass** jedes Kunststoffsegment (12) mindestens einen zumindest abschnittsweise umlaufenden Schweißflansch (14) aufweist.

6. Kraftstofftank (10) nach einem der vorhergehenden Ansprüche, **dadurch gekennzeichnet, dass** der Kraftstofftank (10) zumindest bereichsweise durch eine Blende (18) abgedeckt ist.

## Claims

1. Fuel tank (10) for a motorcycle, comprising at least three plastic segments (12) which are connected to one another by means of plastic welding, wherein at least one of the plastic segments (12) has on its outer side a paintable cover layer (16), wherein the cover layer (16) is detachably mounted on a plastic segment (12) by means of at least one connecting means, and wherein at least one plastic segment (12) is formed as a central part open on two sides and at least two further plastic segments are formed as covers open on one side and the covers are arranged on both sides of the central part.

2. Fuel tank (10) according to claim 1, **characterized in that** the paintable cover layer (16) is a metal sheet.

3. Fuel tank according to claim 1, **characterized in that** the paintable cover layer (16) comprises plastic or consists of plastic.

4. Fuel tank (10) according to one of the preceding claims, **characterized in that** the cover layer (16) has at least one mounting element (22).

5. Fuel tank (10) according to one of the preceding claims, **characterized in that** each plastic segment (12) has at least one welding flange (14) extending at least partially around the circumference.

6. Fuel tank (10) according to one of the preceding claims, **characterized in that** the fuel tank (10) is covered at least in regions by a cover panel (18).

## Revendications

1. Réservoir de carburant (10) pour une motocyclette, comprenant au moins trois segments en matière plastique (12) qui sont reliés les uns aux autres au moyen d'un soudage de matière plastique, dans lequel au moins un des segments en matière plastique (12) présente sur son côté extérieur une couche de recouvrement (16) pouvant être peinte, dans lequel la couche de recouvrement (16) est montée de manière détachable sur un segment en matière plastique (12) au moyen d'au moins un moyen de liaison, et dans lequel au moins un segment en matière plastique (12) est formé en tant que partie centrale ouverte sur deux côtés et au moins deux autres segments en matière plastique sont formés en tant que couvercles ouverts sur un côté et les couvercles sont disposés des deux côtés de la partie centrale.

2. Réservoir de carburant (10) selon la revendication 1, **caractérisé en ce que** la couche de recouvrement (16) pouvant être peinte est une tôle métallique.

3. Réservoir de carburant selon la revendication 1, **caractérisé en ce que** la couche de recouvrement (16) pouvant être peinte comporte de la matière plastique ou est constituée de matière plastique.

4. Réservoir de carburant (10) selon l'une des revendications précédentes, **caractérisé en ce que** la couche de recouvrement (16) présente au moins un élément de montage (22).

5. Réservoir de carburant (10) selon l'une des revendications précédentes, **caractérisé en ce que** chaque segment en matière plastique (12) présente au moins une bride de soudage (14) s'étendant au moins partiellement sur le pourtour.

6. Réservoir de carburant (10) selon l'une des revendications précédentes, **caractérisé en ce que** le réservoir de carburant (10) est recouvert au moins par zones par un cache (18).
